Europäisches Patentamt

European Patent Office

Office européen des brevets

(11) Publication number: **0 259 153 B1**

# EUROPEAN PATENT SPECIFICATION

(45) Date of publication of patent specification: **01.04.92**  (51) Int. Cl.⁵: **C10G 11/18, B01J 8/32**

(21) Application number: **87307766.3**

(22) Date of filing: **03.09.87**

(54) Process for two-phase fluid catalytic cracking.

(30) Priority: **03.09.86 US 903367**

(43) Date of publication of application:
**09.03.88 Bulletin 88/10**

(45) Publication of the grant of the patent:
**01.04.92 Bulletin 92/14**

(84) Designated Contracting States:
**BE DE FR GB IT NL**

(56) References cited:
**EP-A- 0 127 285**
**US-A- 3 380 911**
**US-A- 4 116 814**

(73) Proprietor: **MOBIL OIL CORPORATION**
**150 East 42nd Street**
**New York New York 10017(US)**

(72) Inventor: **Herbst, Joseph Anthony**
**60 Bryant Road**
**Turnersville New York 08012(US)**
Inventor: **Owen, Hartley**
**5 Riverview Terrace**
**Belle Mead New York 08502(US)**
Inventor: **Schipper, Paul Herbert**
**2506 Berwyn Road**
**Wilmington Delaware 19810(US)**

(74) Representative: **Colmer, Stephen Gary**
**Patent Department c/o Mobil Services Company Limited Mobil Court 3 Clements Inn**
**London WC2A 2EB(GB)**

## Description

This invention relates to a process for fluid catalytic cracking a hydrocarbon feed using a mixture of two different kinds of cracking catalyst particles.

In the conventional FCC, or Fluidized Catalytic Cracking processes, a hydrocarbon feedstock, such as gas oil, is cracked in an elongated reactor riser, at high temperature, to lighter hydrocarbon products. Known catalysts include large pore crystalline zeolites, such as zeolite X or Y, and intermediate pore crystalline zeolites, such as ZSM-5. The reaction products with spent catalysts, are discharged into a separator located in an enclosed stripping vessel, with the spent catalyst flowing downwardly therein. Entrained hydrocarbons are stripped from spent catalyst with stripping gas, such as steam or nitrogen. The stripped catalyst is then regenerated in a fluidized bed regenerator. Following regeneration, the catalyst is recycled to the riser to crack more feed. FCC processes are described in U. S. 3,617,497 and 4,219,407.

An FCC catalyst of mixtures of ZSM-5 and other zeolites is disclosed in U. S. 3,758,403 to Rosinski et al. The ZSM-5 circulates with the other catalysts.

It would be desirable to provide a process and apparatus which can use conventional FCC catalysts and a different catalyst, e.g., an intermediate pore zeolite catalysts, and regenerate the conventional catalyst more than the different catalyst.

In US 4,116,814, Zahner teaches use of two different kinds of catalyst, with separation of catalysts occuring in the fluidized regenerator. This approach will work, but when a less coke sensitive catalyst containing ZSM-5 is used the catalyst spends time unnecessarily in the regenerator.

Another approach to keeping the ZSM-5 additive out of the regenerator is to make it very light, so that it can be collected in secondary cyclones downstream of the riser reactor. The use of ZSM-5 additive with very small particle size and catalyst recycle from secondary cyclones will work but will result in rapid loss of ZSM-5 additive with catalyst fines. Use of light, or low density, ZSM-5 additive will minimize the residence time of the ZSM-5 in the riser reactor because the light additive catalyst will not "slip" in the riser as much as the conventional catalyst. The light ZSM-5 will be largely kept out of the regenerator, but at the price of less residence time in the riser reactor.

U. S. 4,336,160 reduces hydrothermal degradation by staged regeneration. However, all the catalyst from the reactor still is regenerated, thus providing opportunity for hydrothermal degradation.

It would be desirable to provide a process which avoids sending a catalyst, such as intermediate pore zeolite catalysts, unnecessarily to the regenerator. Many additive catalysts, such as intermediate pore zeolite catalysts, do not deactivate with the amount of coke on it from one pass through the reactor riser. Sending this partially-coked, but still highly active, intermediate pore zeolite catalyst to the regenerator results in unnecessary hydrothermal degradation of the intermediate pore zeolite catalyst in the regenerator.

Separation of catalyst in the regenerator helps, but still exposes the additive to unnecessary regeneration. Use of a light-weight (or small size) additive can minimize additive residence time in the regenerator, but also minimizes additive residence time in the riser reactor.

A way has now been discovered to overcome the shortcomings of the prior art.

According to the present invention there is provided a fluid catalytic cracking process, comprising the steps of:

introducing large pore crystalling zeolite cracking catalyst particles, intermediate pore crystalline zeolite cracking catalyst particles, and a lift gas into a first zone of a fluid catalytic cracking reactor riser, the large pore particles requiring more frequent regeneration and being more hydrothermally stable than the intermediate pore catalyst, the intermediate pore particles and the large pore particles having at least one physical characteristic differing sufficiently so that the intermediate pore particles are more elutriatable than the large pore particles;

introducing a hydrocarbon feedstock into a second zone of the riser to form a mixture under fluid catalytic cracking conditions, the second zone being located downstream of the first zone;

discharging the product mixture from the riser to a first catalyst stripping vessel;

countercurrently contacting the mixture of catalyst particles in the first stripping vessel with an upwardly flowing stripping gas to upwardly direct a first portion of the mixture of catalyst particles;

passing the first portion of the catalyst particles out of the first stripping vessel and passing a remaining portion of the catalyst downwardly through the first stripping vessel, through a first annulus between a cylinder and the sidewalls of the first stripping vessel, the mixture of catalyst passing across a perforated tray attached to the cylinder, the first portion of catalyst passing upwardly through a second annulus between the cylinder and the riser, the first portion having a higher ratio of intermediate pore catalyst to large pore catalyst than the remaining portion;

stripping the first portion in a second stripping vessel;

2

regenerating the remaining portion of catalyst in a fluid catalytic regenerator; and

recycling the first portion from the second stripping vessel, and the remaining portion from the regenerator, to the reactor riser.

The present invention will be more fully understood when considered in conjunction with the following drawings, of which:

Fig. 1 is a schematic diagram of an FCC reactor and regenerator of a first embodiment of the invention;

Fig. 2 is a perspective view of a portion of Fig. 1; and

Fig. 3 is a schematic diagram of an FCC reactor and regenerator of a second embodiment of the invention.

Conventional FCC catalyst components are amorphous or zeolites in an amorphous matrix, e.g., crystalline silica-alumina and an amorphous matrix. Other materials said to be useful as cracking catalysts are crystalline silicoaluminophosphates of U. S. 4,440,871 and crystalline metal aluminophosphates of U. S. 4,567,029.

Most FCC units use a large pore crystalline silicate zeolite, in a matrix component which may or may not itself possess catalytic activity. These zeolites typically have an average crystallographic pore dimension of about 7.0 Angstroms and above for their major pore opening. Representative zeolites include zeolite X (U. S. 2,882,244), zeolite Y (U. S. 3,130,007), zeolite ZK-5 (U.S. 3,247,195), zeolite ZK-4 (U. S. 3,314,752), zeolite beta, and naturally-occurring zeolites, such as chabazite, faujasite, mordenite, and the like. Also useful are the silicon-substituted zeolites described in U.S. Patent No. 4,503,023. Zeolite Beta is yet another large pore crystalline silicate which can be used.

Two or more of the foregoing amorphous and/or large pore crystalline cracking catalysts can be the conventional catalyst. The additive catalyst system can be any catalyst which requires more or less frequent regeneration than the conventional catalyst. Thus, for example, a mixed catalyst system of the invention can be a conventional catalyst comprising zeolite Y, which requires frequent regeneration, but is fairly stable in the regenerator, and an additive catalyst comprising Zeolite Beta, which need not be regenerated as frequently.

Preferred conventional catalyst zeolite components include mordenite, faujasite, zeolites X and Y, with particular reference being accorded zeolites Y, REY, USY and RE-USY and mixtures thereof.

Preferred additive catalysts comprise the shape-selective medium pore crystalline silicates, ZSM-5, ZSM-11, ZSM-12, ZSM-23, ZSM-35, ZSM-38, ZSM-48, and other similar materials.

U. S. 3,702,886 and U. S. Reissue 29,948 describe ZSM-5. U. S. 4,061,724 describes a high silica ZSM-5 referred to as "silicalite".

ZSM-11 is described in U. S. 3,709,979.

ZSM-12 is described in U. S. 3,832,449

ZSM-23 is described in U. S. 4,076,842.

ZSM-35 is described in U. S. 4,016,245.

ZSM-38 is described in U. S. 4,046,859.

ZSM-48 is described in U. S. 4,375,373.

ZSM-5 is particularly preferred.

In general, the aluminosilicate zeolites are preferred. However, zeolites with some other framework elements present in partial or total substitution of aluminum can be advantageous. For example, such zeolites may provide a higher conversion of feed to aromatic components, the latter tending to increase the octane, and therefore the quality, of the gasoline produced in the process. Illustrative of elements which can be substituted for part of all of the framework aluminum are boron, gallium, titanium and, in general, any trivalent metal which is heavier than aluminum. Specific examples of such catalysts include ZSM-5 and Zeolite Beta containing boron, gallium and/or titanium. In lieu of, or in addition to, being incorporated into the zeolite framework, these and other catalytically active elements can also be deposited upon the zeolite by any suitable procedure, e.g., impregnation.

Separation of additive catalyst from conventional catalyst component in the stripping unit is accomplished by elutriation.

Separation in the stripper is achieved by classifying the first and second catalyst components according to their physical properties, e.g., average particle densities, and size. These can be made significantly different in various ways.

The physical properties of the conventional and additive catalysts are selected so they exhibit different settling rates, designated $R_1$ and $R_2$, respectively. This permits the catalyst particles having the greater settling rate (preferably, the conventional catalyst requiring frequent regeneration) to separate from the additive catalyst having the lower settling rate. The catalysts are separately sent to a regenerator, and to the reactor. Residence time of catalyst in the stripper is primarily dependent on two factors: the linear velocity

EP 0 259 153 B1

of the fluid in the stripper which lifts catalyst up and the opposing force of gravity which pulls the catalyst down. In conventional catalyst stripping all catalyst components circulate through the stripper at about the same rate. When medium pore zeolites or other catalyst additives are used which do not require frequent regeneration the additives are needlessly subjected to the catalyst-degrading conditions of the regenerator. The resulting useful life of the additive is shortened. However, in accordance with this invention, it is possible to separate in the stripper the catalysts and to divert an additive catalyst away, or into, the regenerator. To promote separation of additive from conventional catalyst in the stripper the average density, particle size and/or shape of the additive can be adjusted to provide the desired settling characteristics.

Among the techniques which can be used for making one catalyst component more dense than the other is compositing with a matrix component of substantially different density. Useful matrix components include:

| Matrix Component | Particle Density (g/cc) |
|---|---|
| Alumina | 3.9 - 4.0 |
| Silica | 2.2 - 2.6 |
| Magnesia | 3.6 |
| Beryllia | 3.0 |
| Barium Oxide | 5.7 |
| Zirconia | 5.6 - 5.9 |
| Titania | 4.3 - 4.9 |

Combinations of two or more of these and/or other suitable porous matrix components, e.g., silica-alumina, silica-magnesia, silica-thoria, silica-alumina-zirconia, etc., can be used for a wide spectrum of density values.

The additive can be either more or less elutriable than the conventional catalyst.

The stripper will separate additive from conventional catalyst. The separated additive can be sent to the FCC reactor. If the additive is more elutriable than the conventional FCC catalyst, then the catalyst will be removed overhead in the stripper. If the additive is heavier, it will be withdrawn from the base of the stripper.

For many FCC units, operation with ZSM-5 additive in a heavy matrix is preferred. The factors which favor use of heavy, less elutriable ZSM-5 are:

1. Bottom catalyst draw from regenerator.
2. More slip of ZSM-5 in the riser reactor.
3. Less loss of ZSM-5 with catalyst fines.
4. Dense catalysts are usually less subject to attrition.

Factors which favor use of a light, more elutriable ZSM-5 or other additive are:

1. Top catalyst draw from regenerator.
2. Stripper needs to elute only a small amount of additive.

In general, the additive matrix used will be picked to cause the additive catalyst to be less dense than the catalyst requiring frequent regeneration. For example, in the case of a mixed catalyst system containing medium pore additive and large pore zeolite conventional catalyst, where it is desired to elute additive overhead from the stripping zone, the overall packed density of additive, inclusive of its matrix component, can vary from 0.4 to 1.1 $gm/cm^3$, and preferably from 0.6 to 1.0 $gm/cm^3$, when the overall packed density of the conventional catalyst ranges from 0.6 to 4.0 $gm/cm^3$ density, and preferably from 1.5 to 3.0 $gm/cm^3$. The densities can be reversed when the additive is to the less elutriable catalyst.

A useful technique for increasing the density of catalyst is to composite it with a material which cokes up faster than, e.g., the medium pore zeolite additive, resulting in an increase in the density of the conventional catalyst in situ. Hydrated alumina in situ forms a transition alumina which has a faster coking rate than, for example zeolite Y. Zeolite Y has a faster coking rate than ZSM-5. This embodiment possesses several additional advantages. In the coked-up state, the composited large pore silicate zeolite is more resistant to attrition, which results from collision with other particles in the riser. In addition, the coked-up composited large pore zeolite particles will tend to accumulate metals present in the feed.

The relative settling rate of particles also is a function of particle size. Large particles settle faster than small particles of the same density. To increase the elutriatability, e.g., of the additive over the conventional catalyst, the average particle size of the additive will be smaller. For example, the average particle size of the large pore zeolite particles can be made to vary from 500 to 70,000 microns, and preferably from 100 to

4

25,000 microns, while the average particle size of the medium pore zeolite particles can be made to vary from 20 to 150 microns, and preferably from 50 to 100 microns.

The shape, or geometric configuration, of particles also affects their relative settling rates, the more irregular the shape (i.e., the more the shape deviates from a sphere), the greater the settling rate. Irregular-shaped particles can be simply and readily achieved by crushing the catalyst-matrix extrudate or using an extruded catalyst.

Settling rate for a particular catalyst component will result from the interaction of each of the three foregoing factors, i.e., density, average particle size and particle shape. The factors can be combined in such a way that they each contribute to the desired result. For example, the particles of one component, e.g., the more coke deactivated catalyst can simultaneously be made denser, larger and more irregular in shape than the additive catalyst particles not requiring frequent regeneration. However, a differential settling rate can still be provided, even if one of the foregoing factors partially offsets another, as would be the case where greater density and smaller average particle size co-exist in the same catalyst particle. The combined effect of these factors will result in a significant differential in settling rates.

The additive, e.g., shape-selective zeolite catalyst can be present in the mixed catalyst system over widely varying levels. For example, the additive zeolite concentration can be as low as 0.01 to 1.0 wt % of the total catalyst inventory (as in in U. S. 4,368,114), and can represent as much as 25 wt % of the total catalyst inventory.

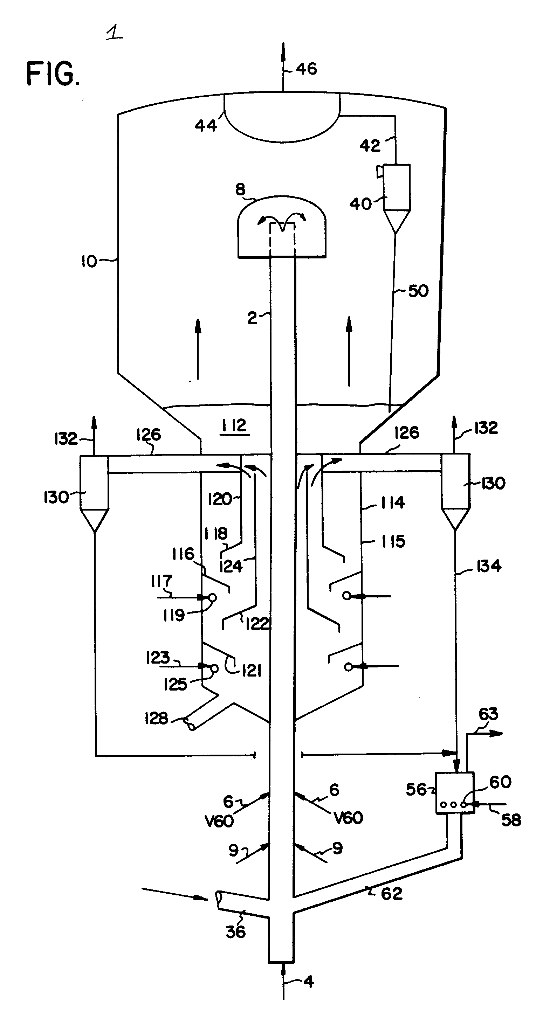

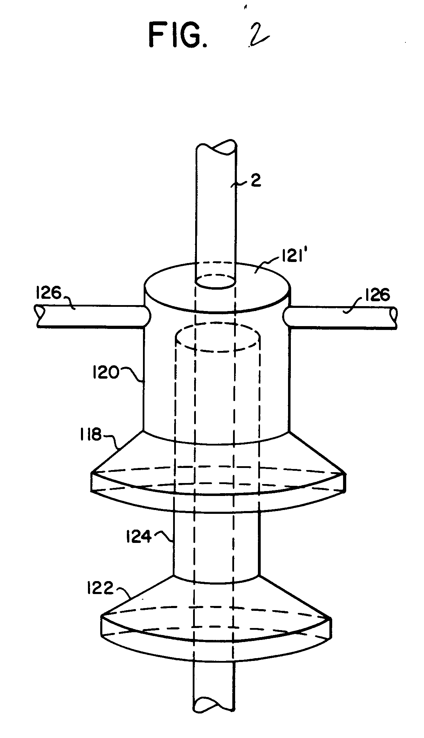

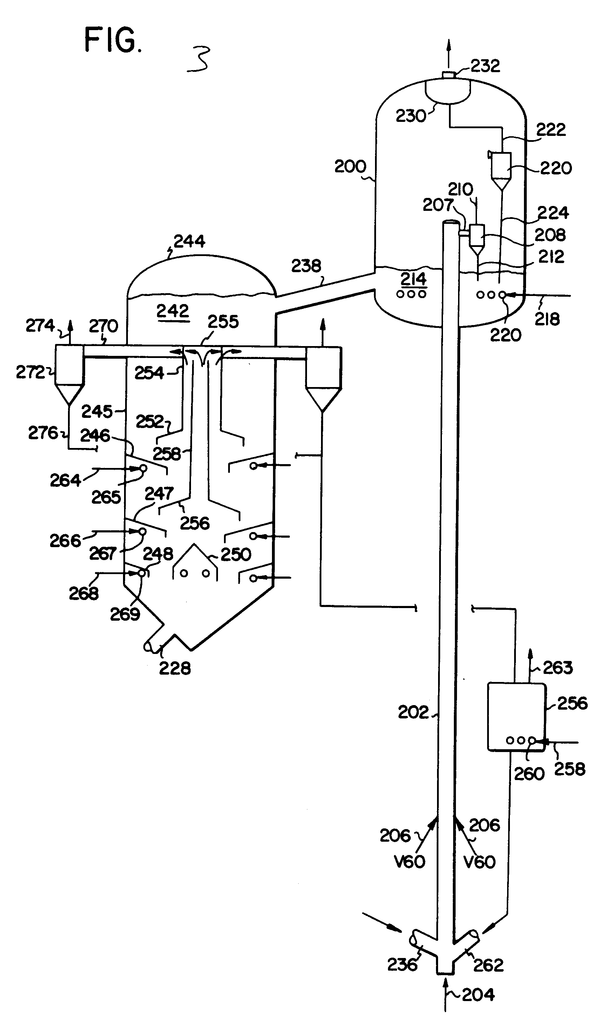

As shown in Fig. 1, conventional catalyst from conduit 36 and a more elutriatable catalyst from conduit 62 combine with a lift gas stream 4 in FCC riser 2. The catalyst mixture comprises particles of conventional FCC catalyst, preferably comprising zeolite X or Y, and particles of an elutriable additive, preferably comprising an intermediate pore zeolite, most preferably ZSM-5. The intermediate pore zeolite, if used, may contain a heavy metal, such as gallium or barium, or both, as part of its framework structure. Preferably, the lift gas contains olefins having 2 to 4 carbon atoms which react in riser 2. Some reactions of olefins in a fluid catalytic cracking reactor riser are more fully discussed in U. S. 3,894,931

Although a lift gas and mid riser addition of feed is shown in the drawing, it is not essential. All the conventional FCC feed can be added via line 4.

The catalyst and lift gas form a mixture which passes up from lower zone 3 into zone 5 of the riser 2. Most preferably, the lift gas 4 contains ethylene. An optional feedstream 9, comprising olefins having 3 to 4 carbon atoms, is injected into zone 3 of riser 2 downstream of where the lift gas 4 combines with catalyst. This maximizes ethylene contact time and promotes dimerization of the ethylene. A conventional FCC feed, e.g., a vacuum gas oil (VGO) stream 6 is added in zone 5. Conventional feeds include gas oils, thermal oils, residual oils, cycle stocks, whole crudes, tar sand oils, shale oils, cycle stocks, synthetic fuels, heavy hydrocarbon fractions derived from the destructive hydrogenation of coal, tar, pitches, asphalts, hydrotreated feedstocks derived from any of the foregoing, and the like. The mixture then continues up under catalytic cracking conditions, including a mixture temperature of 482 to 732 °C (900° and 1350°F), and is discharged from riser 2 at downstream end 7 in a reactor vessel 10. Olefins from streams 4, 9 in zone 3 dimerize and oligomerize and produce reactive molecular fragments which may subsequently react with cracked VGO in the riser 2. The mixture discharges from the riser 2 and contacts a riser cover 8, which downwardly directs the mixture into a catalyst bed 12 contained within a catalyst stripping vessel 14 having sidewalls 15. (The vessel may be tapered with frustoconical sidewalls 115).

As cracking takes place in riser 2, coke deposits on the conventional catalyst, e.g., the large pore zeolite, and deactivates it. The additive, e.g., a ZSM-5 based catalyst is fairly resistant to coking and will retain its catalytic activity. The conventional catalyst is on less elutriatable particles. The additive is on more elutriatable particles. The conventional catalyst is less elutriatable having a greater density or average particle diameter, or both. Employing an irregularly-shaped particle has directionally the same effect on elutriation as increasing particle size. An example of an irregularly-shaped particle is an extruded pellet or crushed pellet. An example of a regularly-shaped particle is a microsphere. Thus, the irregular particles are less elutriatable than regularly-shaped particles, having about the same particle density and hydraulic diameter. The conventional catalyst becomes heavier, and accordingly less elutriatable, during processing because of coking. There is less coking on the ZSM-5 additive. This allows the additive to be elutriated and to bypass regeneration for recycle directly from stripping to the reactor riser. The conventional catalyst passes from the stripper to the regenerator.

Stripping gas enters stripper 114 via stripping gas conduits 117, 123 attached to headers 119, 125, respectively. Gas passes up through bed 112, and countercurrently contacts catalyst. More elutriatable catalyst particles pass up and out of bed 112. Much of the catalyst settles out in bed 112. Some eluted catalyst is entrained in stripping gas, and eventually in cracked hydrocarbon product vapor. The combined stripping gas and product vapor pass through a cyclone 40 in an upper portion of vessel 10. Cyclone 40 recovers entrained catalyst from gases which are removed via overhead conduit 42, plenum chamber 44 and exit through a conduit 46. Recovered catalyst passes through dipleg 50 to bed 112. A number of cyclones 40, in parallel or series, may be used.

Catalyst is withdrawn from the stripper via conduit 120 and discharged into a regenerator riser (not shown), where it passes with lift airstream (not shown) into the conventional regenerator (not shown). Flue gas exits via conduit (not shown). Regenerated catalyst returns via conduit 36 to riser 2.

The Fig. 1 embodiment by-passes elutriatable catalyst around the regenerator. The present invention minimizes regeneration of intermediate pore zeolite catalyst and minimizes hydrothermal deactivation. As intermediate pore zeolite catalyst deactivates less from coking than the conventional catalyst, the present invention prevents unnecessarily sending catalyst to the regenerator, thus reducing regenerator duty.

The catalyst in bed 112 passes down through stripper 114 having perforated trays 116 (baffles) attached to sidewalls 115, a first cylinder 120 and a second cylinder 124. Both cylinders are concentric with the sidewalls 115 and the riser 2. A first inside perforated tray 118 is attached to first cylinder 120 and a second inside perforated tray 122 is attached to second cylinder 124. A top portion of cylinder 124 is inserted into first cylinder 120. Conduit 126 communicates with both cylinders 120, 124. As best seen in Fig. 2, first cylinder 120 has a top wall 121′ to keep out catalyst from bed 112.

Catalyst passes down through an annulus between sidewall 115 and cylinder 120 and contacts perforated trays 118 and 116. Stripping gas from conduit 117 passes into header 119 located below tray 116, and strips downwardly passing catalyst. Elutriatable catalyst rises into an annulus between cylinder 120 and cylinder 124. The remaining catalyst continues down to perforated trays 122 and 121. More stripping gas, from conduit 123 and header 125 under tray 121, contacts falling catalyst. Some catalyst elutes up into an annulus between cylinder 124 and riser 2. Less elutriatable catalyst continues down through conduit 128 to the regenerator (not shown).

The elutriated catalyst portions pass in parallel, through the annulus between cylinders 120, 124 and cylinder 124 and riser 2, through conduit 126 to cyclones 130, which separate gas from catalyst. Two to eight cyclones 130 would be typically provided. The gas passes through overhead conduits 132 to vessel 10. The catalyst is discharged via diplegs 134 to the optional, but preferred, second stripper 56 and recycled to riser 1. The more elutriatable catalyst has a higher ratio of intermediate pore zeolite to large pore zeolite than the conventional catalyst which exits the stripper via conduit 128. In Fig. 1, the more elutriatable catalyst in bed 112 can freely pass up through cylinders 120, 124 and conduit 126 in bed 112, rather than push all the way through the catalyst bed 112 for quicker and more efficient separation of more from less elutriatable catalyst.

Fig. 3 shows a second embodiment of the present invention, with stripper 244 external to a vessel 200. As seen in Fig. 3, catalyst from conduit 236, attached to a regenerator (not shown), catalyst from conduit 262 and a lift gas stream 204 pass upwardly through a riser 202. A vacuum gas oil (VGO) stream 206 is added and passes up through the riser which discharges into vessel 200. Preferably, the lift gas 204 contains $C_2$-$C_4$ olefins. Most preferably, the lift gas 204 contains ethylene and an optional feedstream 209, comprising olefins having 3 to 4 carbon atoms, is injected into the riser 202 between where the lift gas 204 and VGO stream 206 enters the riser. The riser discharges into a riser cyclone 208. The cyclone 208 separates gas from catalyst. Catalyst is discharged via dipleg 212 to catalyst bed 214. Gas passes via overhead conduit 210 to a cyclone 220 which discharges catalyst through dipleg 224 to bed 214. The gas passes up through a conduit 222 to plenum chamber 230, and through conduit 232 out of the reactor vessel 200 to downstream processing, such as fractionation (not shown).

Catalyst in bed 214 is a stripped with from stripping gas conduit 218 attached to a header 219. Stripped catalyst passes via conduit 238 to catalyst bed 242 in stripper 244.

Stripper vessel 244 contains cylinder 254 attached to inside perforated tray 252, top wall 255, cylinder 258 attached to a second inside perforated tray 256, and annular outer perforated trays 246, 247 attached to the sidewalls 245. The catalyst in bed 242 passes down and contacts trays 252 and 246. Stripping gas, from conduit 264, attached to a header 265 located under tray 246, passes up through tray 246 to strip downwardly passing catalyst. Elutriatable catalyst passes up through an annulus between the first and second cylinders 254 and 258. Less elutriatable catalyst continues down to trays 256 and 247.

Stripping gas from conduit 266 and header 267 passes through tray 247 to strip the catalyst and to separate an elutriatable portion of catalyst which passes up through cylinder 258. Less elutriatable catalyst continues down and contacts a conical perforated tray 250 and annular perforated tray 248. More stripping gas from conduit 268 header 269 passes through trays 248 and 250. A third portion of catalyst passes through cylinder 258. The remaining less elutriatable catalyst passes down via through conduit 228, to a regenerator, not shown.

Elutriated catalyst passes up in parallel through the cylinders 254, 258 and conduit 270 to a cyclone

6

272 which separates gas from catalyst. The gas passes up through cyclone withdrawal conduit 274 to vessel 200. The catalyst passes via dipleg 276 to a second stripper 256. Stripping gas from conduit 258 and header 260 produce stripped catalyst which recycles via conduit 262 to riser 202. Gaseous effluent passes via conduit 263 to vessel 200.

The less elutriatable catalyst in conduit 228 has a higher ratio of large pore zeolite to intermediate pore zeolite than the catalyst in conduit 270.

The system of Fig. 3 can be added easily to FCC units having separate strippers. Stripper 244 efficiently separates more elutriatable from less elutriatable because the separated articles do not have to push all the way through catalyst bed 242.

## Claims

1. A fluid catalytic cracking process, comprising the steps of:

introducing large pore crystalling zeolite cracking catalyst particles, intermediate pore crystalline zeolite cracking catalyst particles, and a lift gas into a first zone of a fluid catalytic cracking reactor riser, the large pore particles requiring more frequent regeneration and being more hydrothermally stable than the intermediate pore catalyst, the intermediate pore particles and the large pore particles having at least one physical characteristic differing sufficiently so that the intermediate pore particles are more elutriatable than the large pore particles;

introducing a hydrocarbon feedstock into a second zone of the riser to form a mixture under fluid catalytic cracking conditions, the second zone being located downstream of the first zone;

discharging the product mixture from the riser to a first catalyst stripping vessel;

countercurrently contacting the mixture of catalyst particles in the first stripping vessel with an upwardly flowing stripping gas to upwardly direct a first portion of the mixture of catalyst particles;

passing the first portion of the catalyst particles out of the first stripping vessel and passing a remaining portion of the catalyst downwardly through the first stripping vessel, through a first annulus between a cylinder and the sidewalls of the first stripping vessel, the mixture of catalyst passing across a perforated tray attached to the cylinder, the first portion of catalyst passing upwardly through a second annulus between the cylinder and the riser, the first portion having a higher ratio of intermediate pore catalyst to large pore catalyst than the remaining portion;

stripping the first portion in a second stripping vessel;

regenerating the remaining portion of catalyst in a fluid catalytic regenerator; and

recycling the first portion from the second stripping vessel, and the remaining portion from the regenerator, to the reactor riser.

2. The process of claim 1, wherein the lift gas comprises olefins having 2 to 4 carbon atoms.

3. The process of claim 2, wherein the hydrocarbon feedstock is a vacuum gas oil.

4. The process of any of the preceding claims, wherein the large pore zeolite is selected from zeolite X, Y, REY, USY, US-REY, mordenite and faujasite, and the intermediate pore zeolite is selected from ZSM-5, ZSM-11, ZSM-12, ZSM-23, ZSM-35, ZSM-38 and ZSM-48.

5. The process of claim 4, wherein the intermediate pore zeolite is ZMS-5.

6. The process of any preceding claim, wherein the intermediate pore particles are sufficiently less dense than the large pore particles to be more elutriatable than the large pore particles.

7. The process of any preceding claim, wherein the large pore particles have a larger average particle size distribution than the intermediate pore particles.

8. The process of any preceding claim, wherein the large pore particles are more irregularly-shaped than the intermediate pore particles.

9. The process of any preceding claim, wherein the mixture from the riser is first discharged from the riser into a fluid catalyst cracking reactor vessel, prior to entering the first stripping vessel.

10. The process of claim 9, further comprising terminating the riser within the reactor vessel and locating the first stripping vessel within a lower portion of the reactor vessel and defined by sidewalls which are preferably concentric with the riser.

11. The process of claim 1, wherein the catalyst in the first stripping vessel passes over outer perforated trays attached to the sidewalls and inner perforated trays attached to the riser, and the sidewalls are tapered to have a larger diameter at their top than at their bottom.

12. The process of claim 9 further comprising terminating the riser within the reactor vessels and locating the first stripping zone outside the reactor vessel.

13. The process of any preceding claim, wherein the hydrocarbon feedstock has an initial boiling point of at least 204°C.

**Revendications**

1. Un procédé de craquage catalytique fluidisé, comprenant les étapes de :
   - introduction de particules de catalyseur de craquage zéolitique cristallin à larges pores, de particules de catalyseur de craquage zéolitique cristallin à pores intermédiaires et d'un gaz élévateur dans une première zone d'un réacteur ascendant d'un réacteur de craquage catalytique fluidisé, les particules à larges pores nécessitant une régénération plus fréquente et étant plus stables hydrothermiquement que le catalyseur à pores intermédiaires, les particules à pores intermédiaires et les particules à larges pores ayant au moins une caractéristique physique suffisamment différente pour que les particules à pores intermédiaires soient plus élutriables que les particules à larges pores;
   - introduction d'une charge d'alimentation hydrocarbonée dans une seconde zone du réacteur ascendant pour former un mélange dans des conditions de craquage catalytique fluidisé la seconde zone étant située en aval de la première zone;
   - décharge du mélange de produits depuis le réacteur ascendant dans un premier récipient d'entraînement du catalyseur;
   - mise en contact à contre-courant du mélange de particules catalytiques dans le premier récipient d'entraînement avec un gaz d'entraînement s'écoulant vers le haut pour diriger vers le haut une première portion du mélange de particules catalytiques;
   - envoi de la première portion des particules catalytiques hors du premier récipient d'entraînement et envoi d'une portion restante du catalyseur vers le bas dans le premier récipient d'entraînement, à travers un premier anneau ménagé entre un cylindre et les parois latérales du premier récipient d'entraînement, le mélange de catalyseurs traversant un plateau perforé fixé au cylindre, la première portion du catalyseur montant à travers un second anneau ménagé entre le cylindre et le réacteur ascendant, la première portion ayant un rapport catalyseur à pores intermédiaire/catalyseur à larges pores supérieur à celui de l'autre portion;
   - entraînement de la première portion dans un second récipient d'entraînement;
   - régénération de la portion restante de catalyseur dans un régénérateur catalyseur fluidisé; et
   - recyclage de la première portion provenant du second récipient d'entraînement et de la portion restante provenant du régénérateur dans le réacteur ascendant.

2. Le procédé suivant la revendication 1, dans lequel le gaz élévateur comprend des oléfines ayant 2 à 4 atomes de carbone.

3. Le procédé suivant la revendication 2, dans lequel la charge d'alimentation hydrocarbonée est un gazole sous vide.

4. Le procédé suivant l'une quelconque des revendications précédentes, dans lequel la zéolite à larges pores est sélectionnée parmi les zéolites X, Y, REY, USY, US-REY, mordénite et faujasite, et la zéolite à pores intermédiaires est choisie parmi les ZSM-5, ZSM-11, ZSM-12, ZSM-23, ZSM-35, ZSM-38 et ZSM-48.

5. Le procédé suivant la revendication 4, dans lequel la zéolite à pores intermédiaires est une ZMS-5.

6. Le procédé suivant l'une quelconque des revendications précédents, dans lequel les particules à pores intermédiaires sont suffisamment moins denses que les particules à larges pores pour être plus élutriables que les particules à larges pores.

**7.** Le procédé suivant l'une quelconque des revendications précédentes, dans lequel les particules à larges pores ont une distribution de dimension particulière moyenne plus large que celle des particules à pores intermédiaires.

**8.** Le procédé suivant l'une quelconque des revendications précédentes, dans lequel les particules à larges pores ont une forme plus irrégulière que celle des particules à pores intermédiaires.

**9.** Le procédé suivant l'une quelconque des revendications précédentes, dans lequel le mélange provenant du réacteur ascendant est d'abord déchargé du réacteur ascendant dans un récipient du réacteur de craquage catalytique fluidisé, avant d'entrer dans le premier récipient d'entraînement.

**10.** Le procédé suivant la revendication 9 comprenant de plus la terminaison du réacteur ascendant à l'intérieur du récipient du réacteur et la localisation du premier récipient d'entraînement à l'intérieur d'une portion inférieure du récipient du réacteur et défini par des parois latérales qui sont de préférence concentriques par rapport au réacteur ascendant.

**11.** Le procédé suivant la revendication 1, dans lequel le catalyseur dans le premier récipient d'entraînement passe sur des plateaux perforés extérieurs fixés aux parois latérales et des plateaux perforés intérieurs fixés sur le réacteur ascendant, et les parois latérales sont coniques pour présenter un diamètre plus grand à leur partie supérieure qu'a leur partie inférieure.

**12.** Le procédé suivant la revendication 9 comprenant de plus la terminaison du réacteur ascendant à l'intérieur du récipient du réacteur et la localisation de la première zone d'entraînement à l'extérieur du récipient du réacteur.

**13.** Le procédé suivant l'une quelconque des revendications précédentes, dans lequel la charge d'alimentation hydrocarbonée a un point débullition initial d'au moins 204°C.

**Patentansprüche**

**1.** Katalytisches Wirbelschichtcrackverfahren, welches die Schritte umfaßt:
Einführung von Partikeln eines kristallinen Zeolithcrackkatalysators mit großen Poren, von Partikeln eines kristallinen Zeolithcrackkatalysators mit mittleren Poren und eines Hubgases in die erste Zone eines Riserreaktors für das katalytische Wirbelschichtkracken, wobei die Partikel mit großen Poren eine häufigere Regenerierung erfordern und hydrothermisch stabiler sind als der Katalysator mit mittleren Poren, wobei die Paritkel mit mittleren Poren und die Partikel mit großen Poren zumindest ein physikalisches Merkmal aufweisen, das ausreichend verschieden ist, so daß die Partikel mit mittleren Poren besser ausgeschlämmt werden können als die Partikel mit großen Poren;
Einführung eines Kohlenwasserstoffausgangsmaterials in die zweite Zone des Risers, um unter katalytischen Wirbelschichtbedingungen eine Mischung zu bilden, wobei die zweite Zone stromabwärts der ersten Zone angeordnet ist; Abgabge der Produktmischung aus dem Riser in ein erstes Katalysator-Trenngefäß;
Kontakt der Mischung der Katalysatorpartikel im ersten Trenngefäß im Gegenstrom mit einem nach oben strömenden Trenngas, um den ersten Teil der Mischung der Katalysatorpartikel nach oben zu richten;
Leiten des ersten Teils der Katalysatorpartikel aus dem ersten Trenngefäß und Leiten des verbleibenden Teils des Katalysators nach unten durch das erste Trenngefäß, durch einen ersten Ring zwischen einem Zylinder und den Seitenwänden des ersten Trenngefäßes, wobei die Mischung des Katalysators entlang eines perforierten Bodens strömt, der an den Zylinder angebracht ist, wobei der erste Teil des Katalysators nach oben durch einen zweiten Ring zwischen dem Zylinder und dem Riser strömt, wobei der erste Teil ein größeres Verhältnis des Katalysators mit mittleren Poren zum Katalysator mit großen Poren als der verbleibende Teil aufweist;
Trennen des ersten Teils im zweiten Trenngefäß; Regenerierung des verbleibenden Teils des Katalysators in einem katalytischen Wirbelschichtregenerator; und Rezirkulierung des ersten Teils aus dem zweiten Trenngefäß und des verbleibenden Teils aus dem Regenerator zum Riserreaktor.

**2.** Verfahren nach Anspruch 1, worin das Hubgas Olefine mit zwei bis vier Kohlenstoffatomen umfaßt.

**3.** Verfahren nach Anspruch 2, worin das Kohlenwasserstoffausgangsmaterial ein Vakuumgasöl ist.

**4.** Verfahren nach einem der vorstehenden Ansprüche, worin der Zeolith mit großen Poren aus Zeolit X, Y, REY, USY, US-REY, Mordenit und Faujasit ausgewählt ist und der Zeolith mit mittleren Poren aus ZSM-5, ZSM-11, ZSM-12, ZSM-23, ZSM-35, ZSM-38 und ZSM-48 ausgewählt ist.

**5.** Verfahren nach Anspruch 4, worin der Zeolit mit mittleren Poren ZSM-5 ist.

**6.** Verfahren nach einem der vorstehenden Ansprüche, worin die Partikel mit mittleren Poren in ausreichendem Maße weniger dicht als die Partikel mit großen Poren sind, so daß sie besser ausgeschlämmt werden können als die Partikel mit großen Poren .

**7.** Verfahren nach einem der vorstehenden Ansprüche, worin die Partikel mit großen Poren eine größere durchschnittliche Partikelgrößenverteilung als die Partikel mit mittleren Poren aufweisen.

**8.** Verfahren nach einem der vorstehenden Ansprüche, worin die Partikel mit großen Poren irregulärer geformt sind als die Partikel mit mittleren Poren.

**9.** Verfahren nach einem der vorstehenden Ansprüche, worin die Mischung aus dem Riser vor dem Eintritt in das erste Trenngefäß zuerst aus dem Riser in ein Reaktorgefäß zum katalytischen Wirbelschichtcracken abgegeben wird.

**10.** Verfahren nach Anspruch 9, das außerdem das Abgrenzen des Risers innerhalb des Reaktorgefäßes und die Anordnung des ersten Trenngefäßes im unteren Abschnitt des Reaktorgefäßes und die Begrenzung durch Seitenwände umfaßt, die vorzugsweise mit dem Riser konzentrisch verlaufen.

**11.** Verfahren nach Anspruch 1, worin der Katalysator im ersten Trenngefäß über äußere perforierte Böden, die an die Seitenwände angebracht sind, und innere perforierte Böden strömt, die an den Riser angebracht sind, und die Seitenwände konisch verlaufen, so daß sie an der Oberseite einen größeren Durchmesser als an der Unterseite aufweisen.

**12.** Verfahren nach Anspruch 9, das außerdem das Abgrenzen des Risers innerhalb der Reaktorgefäße und die Anordnung der ersten Trennzone außerhalb des Reaktorgefäßes umfaßt.

**13.** Verfahren nach einem der vorstehenden Ansprüche, worin das Kohlenwasserstoffausgangsmaterial einen Anfangssiedepunkt von mindestens 204 °C aufweist.

FIG. *1*

# FIG. 2

## FIG. 3